# EUROPÄISCHE PATENTSCHRIFT

(11) **EP 0 664 771 B1**
(45) Veröffentlichungstag und Bekanntmachung des Hinweises auf die Patenterteilung: **29.01.1997**
(21) Anmeldenummer: 93924005.7
(22) Anmeldetag: 19.10.1993
(51) Int. Cl.: C02F 1/72, C02F 1/28, C02F 9/00

(54) **VERFAHREN ZUR BEHANDLUNG VON INDUSTRIELLEN ABWÄSSERN MIT TOXISCHEN ORGANISCHEN VERUNREINIGUNGEN IN NIEDRIGER KONZENTRATION**
PROCESS FOR TREATING INDUSTRIAL WASTE WATERS WITH LOW CONCENTRATIONS OF TOXIC ORGANIC POLLUTANTS
PROCEDE DE TRAITEMENT D'EAUX USEES INDUSTRIELLES COMPORTANT DES IMPURETES ORGANIQUES TOXIQUES EN FAIBLE CONCENTRATION

(30) Priorität: 19.10.1992 SI 9200263
(43) Veröffentlichungstag der Anmeldung: 02.08.1995
(73) Patentinhaber: MANNESMANN Aktiengesellschaft, 40213 Düsseldorf (DE); K.T.I. Group B.V., NL-2700 AB Zoetermeer (NL)
(72) Erfinder: LEVEC, Janez, 61000 Ljubljana (SI); PINTAR, Albin, 61420 Tribovije (SI)
(74) Vertreter: Meissner, Peter E., Dipl.-Ing.
(86) Internationale Anmeldenummer: DE9301016
(87) Internationale Veröffentlichungsnummer: WO9408905

(56) Entgegenhaltungen:
- DE-A- 3 938 835
- US-A- 4 340 490
- US-A- 4 370 241
- CHEMICAL ENGINEERING, Band 92, Nr. 18, ver!ffentlicht 02 September 1985 (New York), W.Wesley Eckenfelder Jr. et al., Seiten 60-75
- JOURNAL OF CATALYSIS, Band 135,veröffentlicht 22 Januar 1992, San Diego, New York, A. PINTAR et al. "Catalytic Oxidation of Organics in Aqueous Solutions", Seiten 345-357, S
- APPLIED CATALYSIS, Band 63, ver!ffentlicht 28 Mai 1990, Elsevier, Amsterdam, J. LEVEC "Catalytic Oxidation of Toxic Organics in Aqueous Solution", Seiten L1- L5, S
- DERWENT ACCESSION Nr. 89-210 017, Questel Telesystems (WPI), DERWENT PUBLICATIONS LTD., Z
- DERWENT ACCESSION Nr. 87-091 405, Questel Telesystems (WPI), DERWENT PUBLICATIONS LTD., Z

## Beschreibung

Die Erfindung betrifft ein Verfahren zur wirksamen Entfernung von organischen Verunreinigungen aus Abwasserströmen. Insbesondere bezieht sich die Erfindung auf ein Verfahren, bei dem im ersten Schritt toxische organische Verunreinigungen auf körniger Aktivkohle adsorbiert und konzentriert werden und ein zweiter Schritt folgt, in dem die organischen Verunreinigungen desorbiert werden, so daß die Aktivkohle regeneriert wird, und wobei nachfolgend die Verunreinigungen in einem 3-Phasen-Oxidationsreaktor abgebaut werden.

### Technischer Hintergrund der Erfindung

Viele Abwasserströme, die aus industriellen Tätigkeiten stammen, enthalten organische Verunreinigungen, die entweder toxisch oder kaum biologisch abbaubar sind, so daß eine direkte biologische Behandung nicht durchführbar ist. In diesen Fällen kann es notwendig sein, alternative, weniger gebräuchliche Techniken wie etwa die chemische Oxidation oder die Naß-Luft-Oxidation anzuwenden, um eine Oxidation des enthaltenen organischen Materials zu erreichen. Die Oxidation von verdünnten wässrigen Lösungen organischer Verunreinigungen unter Anwendung von Sauerstoff über einem Feststoff-Katalysator bietet eine Alternative zur nichtkatalytischen Naß-Luft-Oxidation als Mittel zur Reinigung von Abwässern (J. Levec, Appl. Catal., 63, 1990, Seite 1; A. Pintar und J. Levec, J. Catal., 135, 1992, Seite 345). In diesem Prozeß werden organische Stoffe bei wesentlich tieferen Temperaturen und Drücken als in nichtkatalytischen thermischen Prozessen zu Kohlendioxid oxidiert. Der Kernpunkt einer effektiven katalytischen Oxidation ist jedoch der Katalysator. In jüngerer Zeit ist ein Katalysator entwickelt worden, der die Oxidation organischer Stoffe in wässrigen Lösungen unterhalb 200°C fördert (DE 39 38 835 A1; EP 0 429 750 B1). Mit diesen neuen Katalysatoren eröffnet sich für den Oxidationsprozeß ein großes Anwendungsgebiet zur vollständigen Oxidation toxischer organischer Stoffe in Abwässern.

Die Adsorption mit granulierter Aktivkohle ist eine bewährte Technologie für die Prozeßwasserreinigung (W. W. Eckenfehler Jr. et al., Chemical Engineering, 2. September 1985, Seite 60). Aktivkohle ist besonders wirksam zur Entfernung organischer Verunreinigungen, wenn diese in kleinen Mengen in Abwasser gelöst sind. Durch den Kohle-Adsorptionsprozeß werden die organischen Verunreinigungen in den Kohlepartikeln auch konzentriert. Der Kohleaustausch, die Entfernung von verbrauchter Kohle und die Versorgung mit frischer Kohle sind häufig die am meisten kritischen Parameter beim Betrieb des Adsorptionssystems und können die Betriebskosten maßgeblich bestimmen. Eine in-situ-Regeneration von verbrauchter Aktivkohle mit Dampf oder heißem Gas hat nur eine begrenzte Wirksamkeit bei der Regenerierung von Flüssig-Phasen-Aktivkohle. Die am häufigsten benutzte Regenerationstechnik umfaßt ein Erhitzen der verbrauchten Kohle in einer kontrollierten Atmosphäre in einem mehrstufigen Ofen oder Drehrohrofen. Bis zu 10 % der Kohle geht während eines solchen Reaktivierungsprozesses verloren.

Das Verfahren der vorliegenden Erfindung ermöglicht die Regeneration von Aktivkohle innerhalb des Adsorbers, ohne die Kohle aus diesem zu entfernen. Dies wird erreicht durch Rezyklieren von heißem Wasser bei erhöhter Temperatur und erhöhtem Druck durch den Adsorber und den Oxidationsreaktor. Während des Rezyklierens wird der größte Teil der organischen Verunreinigungen von der Kohle desorbiert und in das Wasser abgegeben und anschließend über einem Katalysator in einem Tropfenbettreaktor (trickle bed reactor) oxidiert. Für eine optimale Wirkung sollte das erfindungsgemäße Verfahren innerhalb einer industriellen Anlage dort installiert werden, wo das Abwasser entsteht.

### Kurze Beschreibung der Erfindung

Das Verfahren der vorliegenden Erfindung besteht aus folgenden Schritten:
a) Adsorptionsschritt, in dem Abwasser, das toxische und/oder biologisch schwer abbaubare organische Verunreinigungen enthält, so lange durch eine mit Aktivkohle beladene Kolonne (Adsorber) geführt wird, bis das Kohlebett vollständig benutzt, d.h. seine Adsorptionskapazität verbraucht ist. Die Zuflußkonzentration kann beträchtlich schwanken, ohne daß die Ausfluß-Zielgrößen gefährdet werden. Die Adsorption wird zweckmäßig durchgeführt bei Umgebungsdruck und Umgebungstemperatur. Der Druck hat nämlich praktisch keinen Einfluß auf die Adsorption, wohl aber die Temperatur. Daher sollten höhere Temperaturen vermieden werden. Eine Kühlung unter Umgebungstemperatur oder übliche Kühlwassertemperatur ist wegen des erforderlichen Energieaufwandes nicht empfehlenswert. Der praktisch in Frage kommende Temperaturbereich liegt etwa zwischen 10 und 30°C.
b) Desorptions-/Regenerationsschritt, in dem die gebrauchte Aktivkohle im Flüssig-Phasen-Betrieb bei Temperaturen von 80 bis zu 200°C und über dem Dampfdruck der Flüssigkeit liegendem erhöhtem Druck regeneriert wird. Dabei sollte ein überdruck von 30 bar (31 bar absolut) möglichst nicht überschritten werden. Innerhalb des Adsorbers kann der Flüssigkeitsstrom sowohl im Adsorptions- als auch im Desorptions-/Regenerations-Betriebsmodus aufwärts oder abwärts gerichtet sein.
c) Oxidativer Abbauschritt, in dem die desorbierten organischen Verunreinigungen in einem Tropfenbett über einem Katalysator zu Kohlendioxid oxidiert werden. Ein besonders zweckmäßiger Katalysator ist in der DE 39 38 835 A1 und der EP 0 429 750 B1 beschrieben und enthält 30 - 50 Gewichts-% Kupferoxid, 40 - 50 Gew-% Zinkoxid, 0 - 4 Gew-% Chromoxid und 5 - 15 Gew-% Aluminiumoxid. Die Oxidation wird ausgeführt in der Flüssigphase bei erhöhtem Druck (bis zu 60 bar überdruck) und erhöhten Temperaturen von mindestens 120°C bis zu 250°C. Im Oxidationsreaktor können die Gasphase (Luft oder Sauerstoff) und die Flüssigphase jeweils im Gleichstrom aufwärts oder abwärts fließen. Der Sauerstoffpartialdruck sollte mindestens 3 bar betragen.

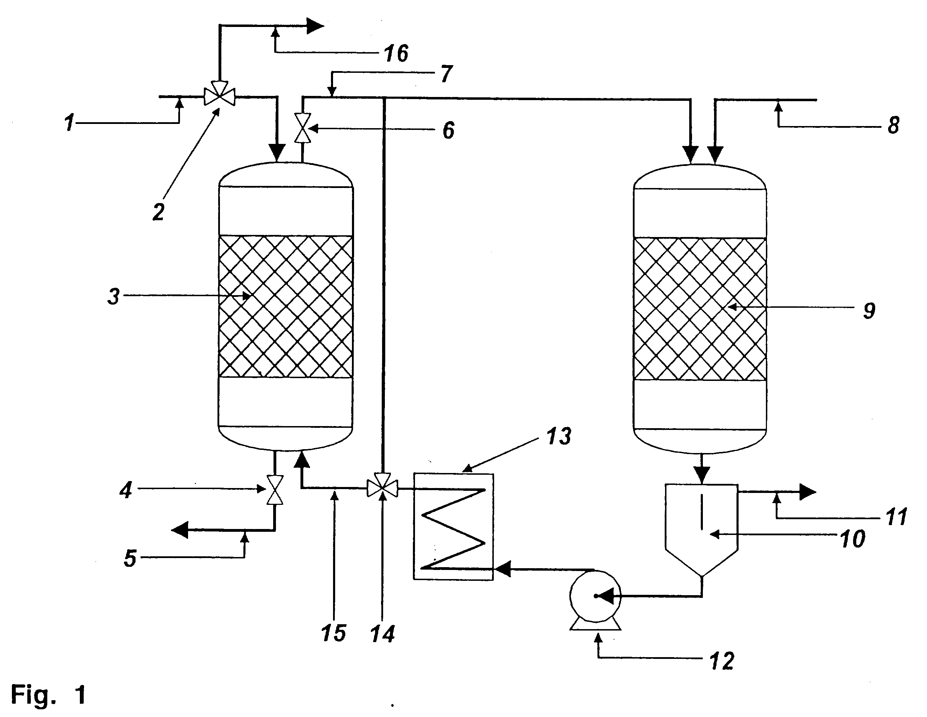

Das Verfahren der vorliegenden Erfindung ist schematisch in Figur 1 dargestellt. Das Abwasser, das gelöste toxische organische Verunreinigungen enthält, wird durch eine Leitung 1 über ein 3-Wege-Ventil (Einlaßventil 2) in den Adsorber 3 geführt, der mit granulierter Aktivkohle beladen ist. Der Flüssigkeitsstrom durch das Kohlebett wird durch einen Druckgradienten erzwungen. Der Verbrauch des Kohlebetts (Beladung mit Schadstoffen) wird überwacht durch das Auftreten der "Durchbruchskurve" (breakthrough curve appearance). Nachdem das Kohlebett mit organischen Stoffen gesättigt ist und das Einlaßventil 2 und das in einer Auslaßleitung 5 am unteren Ende des Adsorbers 3 angeordnete Auslaßventil 4 geschlossen sind, wird der Adsorber 3 auf Arbeitstemperatur erhitzt. Zu gleicher Zeit wird der Vorwärmer 13 eingeschaltet, der über eine Heißwasserzuleitung 15, welche ein 3-Wege-Ventil 14 enthält, mit dem Adsorber 3 verbunden ist. Der Adsorber 3 ist an seinem oberen Ende mit einer zu einem Reaktor 9 führenden Heißwasserableitung 7 verbunden, in die ein Absperrventil 6 eingeschaltet ist. Der Reaktor 9 wiederum ist an seinem unteren Ende durch eine Rohrleitung mit dem Vorwärmer 13 verbunden. Sobald die Wassertemperatur im Adsorber 3 und Vorwärmer 13 die Arbeitstemperatur erreicht hat, werden die Ventile 6 und 14 geöffnet, und das heiße Wasser beginnt mittels einer Pumpe 12 im Kreislauf durch den Adsorber 3 und den Reaktor 9 zu strömen. Nachdem das heiße im Kreislauf geführte Wasser (Recyclingwasser) die Reaktionstemperatur (120 - 250°C) erreicht hat, wird ein sauerstoffhaltiger Strom tz.B. Luft) durch eine Leitung 8 oben in den Reaktor 9 eingeleitet. Der Druck in beiden Einheiten (Adsorber 3, Reaktor 9) ist zweckmäßig derselbe und beträgt z.B. 20 bar oder auch bis zu 30 bar (überdruck). Der Reaktor 9 arbeitet unter 2-Phasen-Durchfluß-Bedingungen, während im Adsorber 3 nur eine Phase (flüssig) auftritt. Aufgrund der erhöhten Temperatur im Adsorber 3 werden die organischen Stoffe, die bei Umgebungstemperatur adsorbiert wurden, nun desorbiert und an das heiße Recyclingwasser abgegeben und anschließend im Tropfenbettreaktor 9 zu Kohlendioxid oxidiert. Der so behandelte Strom des Recyclingwassers gelangt hinter dem Reaktor 9 in eine Gas/Flüssigkeitstrennung 10, so daß die Gasphase (insbesondere das gebildete CO₂ und das unverbrauchte sauerstoffhaltige Gas) durch eine Abgasleitung 11 abgeführt werden kann, während das schadstofffreie Recyclingwasser über die Pumpe 12 wieder in den Vorwärmer 13 geführt wird. Während des Desorptionsbetriebs wird der zu reinigende Abwasserstrom über das 3-Wege-Ventil 2 durch die Leitung 16 zu einer parallel geschalteten (nicht dargestellten) zweiten Adsorptionskolonne geführt. Die Desorption/Regeneration und die damit verbundene Oxidationsreaktion ist abgeschlossen, sobald der Restgehalt an organischen Stoffen im Recyclingwasser unter eine bestimmte Konzentrationsgrenze fällt. Es ist zu betonen, daß die organischen Stoffe weder vollständig von der Aktivkohle desorbiert noch vollständig im Reaktor 9 oxidiert werden müssen. In einem solchen Fall wird lediglich die Adsorptionskapazität der Aktivkohle entsprechend reduziert. Demzufolge kann dies die Fähigkeit der Aktivkohle, organische Stoffe bis auf niedrige Gehalte im Adsorptionsschritt zu entfernen, reduzieren.

Das Verfahren der vorliegenden Erfindung, die in einer Kombination von Adsorptions- und oxidativen Regenerationsprozessen besteht, nutzt die Vorteile beider Einzelprozesse aus. Beispielsweise kann die Regeneration der Kohle in situ durchgeführt werden ohne Verlust an Kohle, so daß keine Kohleaufbereitung benötigt wird. Eventuell aus dem Katalysator ausgeschwemmte Metall-Kationen verschmutzen nicht das abfließende behandelte Wasser, da sie im Recyclingwasser verbleiben und dort zusätzlich als homogener Katalysator arbeiten. Die Deaktivierung des Katalysators ist deutlich erhöht und die Lebensdauer des Katalysators wesentlich verlängert, wenn man das erfindungsgemäße Verfahren vergleicht mit einem Verfahren ohne vorhergehende Adsorption (d.h. direkte Oxidation). Darüber hinaus wirkt sich die vorhergehende Konzentration von organischen Verunreinigungen auf Aktivkohle in höheren Oxidationsraten und demzufolge kürzeren Katalysatorbetten im Vergleich mit der direkten Oxidation aus.

### Detaillierte Beschreibung der Erfindung

### Beispiel I: Regeneration von verbrauchter Aktivkohle mit heißem Druckwasser

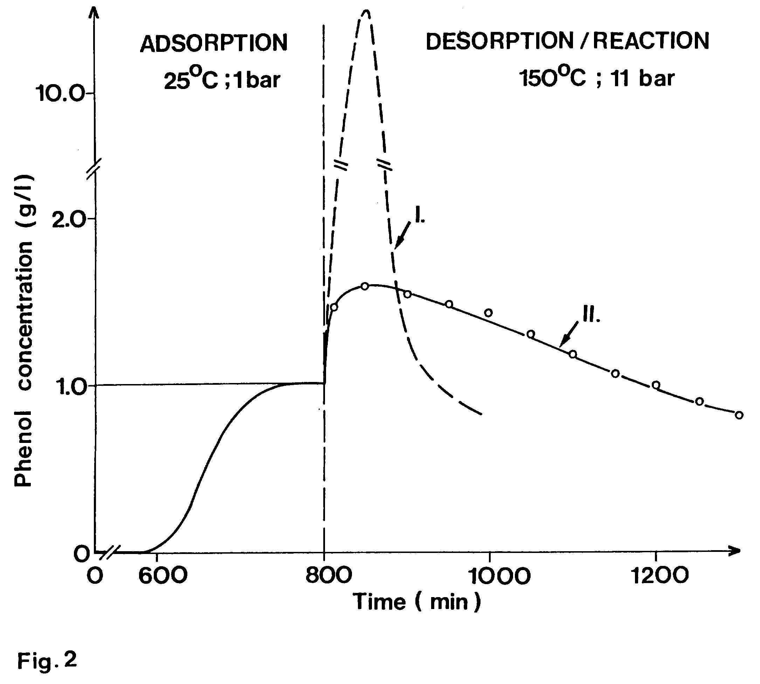

In einem Versuch wurde als Abwasser eine wässrige Phenol-Lösung mit einer Konzentration von 1,0 g/l benutzt. Die Lösung wurde mit einer Durchflußrate von 3 l/h in eine Adsorptionskolonne aus rostfreiem Stahl (Innendurchmesser 34 mm) eingeleitet, die mit 125 g Aktivkohle (Betthöhe 380 mm) gefüllt war, deren Partikelgröße 1,6 mm betrug. Der Benutzungsgrad der Aktivkohle wurde überwacht durch Phenolkonzentrationsmessungen (HPLC) im Adsorberausfluß. Sobald Phenol im Ausfluß festgestellt wurde (Konzentration unter 0,2 mg/l), wurde angenommen, daß die Aktivkohle mit den Verunreinigungsstoffen gesättigt war. Der Rdsorptionsprozeß wurde ausgeführt bei Umgebungsdruck (1 bar absolut) und Umgebungstemperatur (ca. 22°C). Die Desorption/Regeneration der benutzten Aktivkohle wurde mittels Heißwasser (150°C; 10 bar überdruck) durchgeführt mit einer Durchflußrate von 3 l/h durch den Adsorber. Die Phenolkonzentration im abfließenden Wasser wurde überwacht mittels HPLC und ist in Figur 2 als Funktion der Zeit graphisch dargestellt (Kurve I). Nachdem die Phenolkonzentration unter 1,5 g/l gefallen war, wurde der Desorptions-/Regenerationsprozeß beendet. Als Ergebnis wurde festgestellt, daß 26,7 g Phenol auf der Aktivkohle bei Raumtemperatur adsorbiert wurden; nachdem der Desorptions-/Regenerationsschritt durchgeführt war, blieben noch 5,6 g Phenol auf der Kohle adsorbiert. Das bedeutet, daß unter den angewendeten Bedingungen ca. 80 % der ursprünglichen Aktivkohlekapazität wieder erreicht wurden. Eine katalytische Behandlung des mit Phenol beladenen Heißwassers im Sinne der vorliegenden Erfindung wurde in diesem Beispiel noch nicht durchgeführt.

### Beispiel II: Regeneration von gebrauchter Aktivkohle mit Heißwasser und simultaner oxidativer Abbau von desorbiertem Phenol

Das mit Phenol gesättigte Aktivkohlebett aus Beispiel I wurde regeneriert mittels Heißwasser, das erfindungsgemäß im Kreislauf durch den Adsorber und den Tropfenbettreaktor geführt wurde. Die Durchflußrate des Recyclingwassers wurde auf 2 l/h eingestellt. Nachdem das Recyclingwasser die vorgegebene Temperatur von 150°C erreicht hatte, wurde ein Sauerstoffstrom mit einer Durchflußrate von 2 llmin in den Tropfenbettreaktor eingeleitet. Der Reaktor (Innendurchmesser 34 mm) war beladen mit 730 g eines Katalysators (Betthöhe 810 mm), wie er in der DE 39 38 835 A1 und in der EP 0 429 750 B1 beschrieben ist. Der Betriebsdruck im Adsorber und im Reaktor betrug 10 bar (überdruck). Das Heißwasser (2,5 l) wurde über eine Dauer von 10 h im Kreislauf geführt. In dieser Zeit sank die Phenolkonzentration im heißen Recyclingwasser, die mittels HPLC-Analysierer (high performance liquid chromatography) und TOC-Analysierer (total organic carbon) überwacht wurde, bis auf 0,8 g/l (Kurve II in Figur 2) ab, was ungefähr einer 90%igen Wiederherstellung der ursprünglichen Aktivkohle-Adsorptionskapazität entspricht. Nach 5 anschließenden Adsorptions-/Regenerations-/Oxidations-Zyklen hatten sich die Adsorptionseigenschaften der Aktivkohle nicht geändert. Die Konzentration von ausgelaugten Kupfer- und Zinkionen im recyclierten Wasser wurden mit 20 bzw. 32 mg/l mittels AAs (atomic absorption spectroscopy) gemessen. Das aus der Adsorptionsstufe jeweils abfließende behandelte Wasser enthielt weder Phenol noch Kupfer oder Zink.

## Patentansprüche

1. Verfahren zur Behandlung von industriellen Abwasserströmen, die organische Verunreinigungen in niedriger Konzentration enthalten,
gekennzeichnet durch die folgenden Verfahrensschritte:
a) Adsorption der organischen Verunreinigungen aus dem Abwasserstrom auf körniger Aktivkohle durchgeführt bei Temperaturen zwischen 10 und 30 °C,
b) Desorption der organischen Verunreinigungen von der Aktivkohle und in-situ-Regeneration der Aktivkohle mittels Heißwasser, welches im Kreislauf durch das Aktivkohle-Bett (Adsorber) und einen Oxidationsreaktor bei erhöhten Drücken bis zu 30 bar (Überdruck) und Temperaturen zwischen 80 und 200°C geführt wird,
c) Abbau der von der Aktivkohle desorbierten organischen Stoffe durch katalytische Flüssigphasenoxidation in einem 3-Phasen-Reaktor über einem Katalysator, wobei erhöhte Drücke von bis zu 60 bar (Überdruck) und Temperaturen zwischen 120 und 250 °C bei einem Mindestsauerstoffpartialdruck von 3 bar herrschen und die strömenden Phasen im Oxidationsreaktor jeweils im Gleichstrom entweder aufwärts oder abwärts gerichtet sind.

2. Verfahren nach Anspruch 1,
gekennzeichnet durch die folgenden Schritte:
a) Adsorption von Phenol aus einer wässrigen Lösung, die 0,1 - 5 g Phenol pro Liter Wasser enthält, in einem Festbettadsorber, der mit Aktivkohle beladen ist, wobei die Adsorption bei Atmosphärendruck und Temperaturen zwischen 15 und 25°C stattfindet,
b) Desorption des Phenol von der Aktivkohle in heißes Recyclingwasser und in-situ-Regeneration des Aktivkohlebetts bei erhöhten Drücken bis zu 20 bar (überdruck) und Temperaturen im Bereich von 130 - 160 °C,
c) Abbau des desorbierten Phenols durch katalytische Flüssigphasenoxidation zu Kohlendioxid in dem Tropfenbettreaktor über einem Katalysator bei erhöhten Drücken bis zu 20 bar (Überdruck) und Temperaturen zwischen 130 und 160°C und einem Sauerstoffpartialdruck von wenigstens 3 bar.

3. Verfahren nach einem der Ansprüche 1 oder 2,
dadurch gekennzeichnet,
daß die Flüssigphasenoxidation mit einem Katalysator ausgeführt wird, der 20 - 40 Gew-% CuO, 15 - 25 Gew-% ZnO, 0 - 4 Gew-% Cr₂O₂ und 20 - 40 Gew-% Al₂O₃ enthält.

4. Verfahren nach einem der Ansprüche 1 bis 3,
dadurch gekennzeichnet,
daß während der Desorption und der Flüssigphasenoxidation im Adsorber und im 3-Phasen-Reaktor der gleiche überdruck eingestellt wird.

## Claims

1. A process for the treatment of streams of industrial waste water which contain organic pollutants in low concentration, characterised by the following process steps:
a) adsorption of the organic pollutants from the stream of water on granular activated carbon, effected at temperatures between 10 and 30°C,
b) desorption of the organic pollutants from the activated carbon and in situ regeneration of the activated carbon by means of hot water which is circulated through the activated carbon bed (adsorber) and an oxidation reactor at elevated pressures of up to 30 bar (superatmospheric pressure) and temperatures between 80 and 200°C,
c) decomposition of the organic substances desorbed from the activated carbon by catalytic liquid phase oxidation in a three-phase reactor over a catalyst, with elevated pressures of up to 60 bar (superatmospheric pressure) and temperatures between 120 and 250°C at a minimum oxygen partial pressure of 3 bar prevailing and the flowing phases in the oxidation reactor in each case being directed in a co-current flow either upwards or downwards.

2. A process according to Claim 1, characterised by the following steps:
a) adsorption of phenol from an aqueous solution which contains 0.1 - 5 g phenol per litre of water, in a fixed-bed adsorber which is laden with activated carbon, the adsorption being effected at atmospheric pressure and temperatures between 15 and 25°C,
b) desorption of the phenol from the activated carbon in hot recycling water and in situ regeneration of the activated carbon bed at elevated pressures of up to 20 bar (superatmospheric pressure) and temperatures in the range of 130 - 160°C,
c) decomposition of the desorbed phenol by catalytic liquid phase oxidation to give carbon dioxide in a drop bed reactor over a catalyst at elevated pressures of up to 20 bar (superatmospheric pressure) and temperatures between 130 and 160°C and an oxygen partial pressure of at least 3 bar.

3. A process according to one of Claims 1 or 2, characterised in that the liquid phase oxidation is effected using a catalyst which contains 20-40% by weight CuO, 15-25% by weight ZnO, 0-4% by weight Cr₂O₂ and 20-40% by weight Al₂O₃.

4. A process according to one of Claims 1 to 3, characterised in that the same superatmospheric pressure is set during the desorption and the liquid phase oxidation in the adsorber and in the three-phase reactor.

## Revendications

1. Procédé pour traiter des eaux usées industrielles, qui contiennent des impuretés organiques en faible concentration,
caractérisé par les étapes de procédé suivantes :
a) adsorption des impuretés organiques à partir des eaux usées sur du charbon actif en grains, réalisée à des températures entre 10 et 30°C,
b) désorption des impuretés organiques du charbon actif et régénération in situ du charbon actif au moyen d'eau chaude, laquelle est guidée dans le circuit à travers le lit de charbon actif (adsorbeur) et un réacteur d'oxydation pour des pressions élevées jusqu'à 30 bars (surpression) et des températures entre 80 et 200°C,
c) décomposition des matières organiques désorbées du charbon actif par oxydation catalytique en phase liquide dans un réacteur à trois phases par l'intermédiaire d'un catalyseur, des pressions élevées jusqu'à 60 bars (surpression) et des températures entre 120 et 250°C régnant pour une pression partielle d'oxygène minimale de 3 bars et les phases qui s'écoulent dans le réacteur d'oxydation étant orientées à chaque fois en écoulement de même sens soit vers le haut, soit vers le bas.

2. Procédé selon la revendication 1,
caractérisé par les étapes suivantes :
a) adsorption de phénol à partir d'une solution aqueuse, qui contient 0,1-5 g de phénol par litre d'eau, dans un adsorbeur à lit fixe, qui est chargé de charbon actif, l'adsorption ayant lieu à la pression atmosphérique et à des températures entre 15 et 25°C,
b) désorption du phénol du charbon actif dans de l'eau de recyclage chaude et régénération in situ du lit de charbon actif pour des pressions élevées jusqu'à 20 bars (surpression) et des températures dans la plage de 130-160°C,
c) décomposition du phénol désorbé par oxydation catalytique en phase liquide en dioxyde de carbone dans le réacteur à lit goutte à goutte par l'intermédiaire d'un catalyseur pour des pressions élevées jusqu'à 20 bars (surpression) et des températures entre 130 et 160°C et une pression partielle d'oxygène d'au moins 3 bars.

3. Procédé selon une des revendications 1 ou 2,
caractérisé en ce que l'oxydation en phase liquide est réalisée avec un catalyseur qui contient 20-40 % en poids de CuO, 15-25 % en poids de ZnO, 0-4 % en poids de Cr₂O₂ et 20-40 % en poids de Al₂O₃.

4. Procédé selon une des revendications 1 à 3,
caractérisé en ce que, pendant la désorption et l'oxydation en phase liquide, la même surpression est réglée dans l'adsorbeur et dans le réacteur à trois phases.
